(19) **Europäisches Patentamt / European Patent Office / Office européen des brevets**

(11) **EP 4 513 583 A1**

(12) **EUROPEAN PATENT APPLICATION**
published in accordance with Art. 153(4) EPC

(43) Date of publication:
26.02.2025 Bulletin 2025/09

(21) Application number: 23792221.6

(22) Date of filing: 20.04.2023

(51) International Patent Classification (IPC):
$H01M\ 4/13^{(2010.01)}$ $H01M\ 4/04^{(2006.01)}$
$H01M\ 4/139^{(2010.01)}$ $H01M\ 4/62^{(2006.01)}$
$H01M\ 4/66^{(2006.01)}$ $H01M\ 10/052^{(2010.01)}$
$H01M\ 4/02^{(2006.01)}$

(52) Cooperative Patent Classification (CPC):
H01M 4/02; H01M 4/04; H01M 4/13; H01M 4/139;
H01M 4/62; H01M 4/66; H01M 10/052; Y02E 60/10

(86) International application number:
PCT/KR2023/005414

(87) International publication number:
WO 2023/204647 (26.10.2023 Gazette 2023/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.04.2022 KR 20220049213

(71) Applicants:
• LG Energy Solution, Ltd.
Seoul 07335 (KR)
• The Chemours Company FC, LLC
Wilmington, Delaware 19801 (US)
• Chemours-Mitsui Fluoroproducts Co., Ltd.
Tokyo 105-0001 (JP)

(72) Inventors:
• KWAK, Sang-Min
Daejeon 34122 (KR)
• KANG, Seong-Wook
Daejeon 34122 (KR)

• SHIN, Dong-Oh
Daejeon 34122 (KR)
• YOO, Kwang-Ho
Daejeon 34122 (KR)
• YOON, Kyung-Hwan
Daejeon 34122 (KR)
• LEE, Ki-Seok
Daejeon 34122 (KR)
• LEE, Nam-Jeong
Daejeon 34122 (KR)
• HAN, Jae-Sung
Daejeon 34122 (KR)
• KO, Seung Kyung
Seongnam-si, Gyeonggi-do 13491 (KR)
• TERAUCHI, Kenji
Shizuoka-shi, Shizuoka 420--0035 (JP)
• JEONG, Chorong
Shizuoka-Shi, Shizuoka 424--8631 (JP)

(74) Representative: Plasseraud IP
104 Rue de Richelieu
CS92104
75080 Paris Cedex 02 (FR)

(54) **ELECTRODE, SECONDARY BATTERY COMPRISING SAME, AND METHOD FOR MANUFACTURING SAME**

(57) Disclosed is an electrode which includes: an electrode current collector; and an electrode layer disposed on the electrode current collector and containing an active material, a conductive material, a binder and a fluoro-elastomer, and has a flexural resistance of 10 mm Φ or less. A secondary battery including the electrode, and an energy storage system are also disclosed.

FIG. 1

10

# EP 4 513 583 A1

**Description**

TECHNICAL FIELD

The present disclosure relates to an electrode, a secondary battery including the same, and a method for manufacturing the same. Particularly, the present disclosure relates to an electrode having improved flexibility, a secondary battery including the same, and a method for manufacturing the same.

The present application claims priority to Korean Patent Application No. 10-2022-0049213 filed on April 20, 2022 in the Republic of Korea, the disclosures of which are incorporated herein by reference.

BACKGROUND ART

Due to a rapid increase in use of fossil fuel, there has been an increasing need for use of substitute energy and clean energy. The most actively studied field as a part of attempts to meet such a need is the field of power generation and power storage using electrochemistry. Currently, typical examples of electrochemical devices using electrochemical energy include secondary batteries, and application thereof has been extended gradually. A lithium secondary battery as a representative of such secondary batteries has been used not only as an energy source of mobile instruments but also as a power source of electric vehicles and hybrid electric vehicles capable of substituting for vehicles, such as gasoline vehicles and diesel vehicles, using fossil fuel and regarded as one of the main causes of air pollution, recently. In addition, application of such a lithium secondary battery has been extended even to a supplementary power source of electric power through the formation into a grid.

A process of manufacturing such a lithium secondary battery is broadly divided into the three steps of an electrode-forming step, an electrode assembly-forming step and an aging step. The electrode-forming step is further divided into an electrode mixture-mixing step, an electrode coating step, a drying step, a pressing step, a slitting step, a winding step, or the like.

Among the steps, the electrode mixture-mixing step is a step of mixing the ingredients for forming an electrode active layer configured to carry out electrochemical reactions actually in the electrode. Particularly, an electrode active material as an essential element of the electrode is mixed with other additives, including a conductive material and a filler, a binder used for the binding of powder particles among themselves and the adhesion to a current collector, a solvent for imparting viscosity and dispersing a powder, or the like, to prepare a slurry having flowability.

Then, an electrode-coating step of applying the slurry onto a current collector having electrical conductivity and a drying step of removing the solvent contained in the electrode mixture are carried out, and then the resultant electrode is pressed to a predetermined thickness.

Meanwhile, as the solvent contained in the electrode mixture evaporates during the drying step, defects, such as pinholes or cracks, may be generated in the preliminarily formed electrode active layer. In addition, the electrode active layer is not dried uniformly at the internal part and external part thereof, and thus a powder floating phenomenon may occur due to a difference in solvent evaporation rate. In other words, a powder present in a portion dried earlier may float, while forming a gap from a portion dried relatively later, resulting in degradation of electrode quality.

Therefore, to solve the above-mentioned problems, there has been considered a drying apparatus which allows uniform drying of the internal and external parts of an electrode active layer and can control the evaporation rate of a solvent. However, such drying apparatuses are expensive and require a lot of costs and times for their operation, and thus are disadvantageous in terms of manufacture processability.

Therefore, recently, active studies have been conducted to manufacture a dry electrode without using any solvent.

In general, the dry electrode is obtained by laminating a free-standing film, including an active material, a binder, a conductive material, or the like, and formed into the shape of a film, on a current collector.

In such a conventional dry electrode, an active material, a carbonaceous material as a conductive material and a binder capable of fibrilization are mixed by using a blender, or the like, the binder is fibrilized through a high-shear mixing step, such as jet-milling, and then the resultant mixture is subjected to calendering into the shape of a film, thereby providing a free-standing film. Then, the free-standing film obtained after the calendering is laminated on a current collector to obtain a dry electrode.

However, when applying such a high-shear mixing step to a highly brittle active material, a lot of fine powder having a small particle size is generated to cause degradation of mechanical performance or electrochemical performance. When the high-shear mixing is carried out excessively, the resultant binder fibers may be cut to cause degradation of the flexibility of the free-standing film. In addition, the ingredients may be adhered to the inside of equipment during the jet-milling step to interrupt the flow of high-pressure air, resulting in the problem of the blocking of a flow path, which is not favorable to mass production.

Moreover, the conventional technology of manufacturing a dry electrode provides low flexibility, and thus there is a problem in that the dry electrode is broken easily.

Therefore, there is an imminent need for developing a technology of manufacturing a dry electrode which can solve the above-mentioned problems.

DISCLOSURE

Technical Problem

The present disclosure is designed to solve the problems of the related art, and therefore the present disclosure is directed to providing an electrode having improved flexibility, a secondary battery including the same, and a method for manufacturing the same.

Technical Solution

In one aspect of the present disclosure, there is provided an electrode according to any one of the following embodiments.

According to the first embodiment of the present disclosure, there is provided an electrode which includes:

an electrode current collector; and
an electrode layer disposed on the electrode current collector and containing an active material, a conductive material, a binder and a fluoro-elastomer, and
has a flexural resistance of 10 mm Φ or less.

According to the second embodiment of the present disclosure, there is provided the electrode as defined in the first embodiment, wherein the binder is fibrilized to bind the active material, the conductive material and the fluoro-elastomer.

According to the third embodiment of the present disclosure, there is provided the electrode as defined in the first or the second embodiment, wherein the fluoro-elastomer includes fluorovinylidene-based rubber (FKM), tetrafluoroethylenepropylene-based rubber (FEPM), tetrafluorothylene-perfluoromethylvinyl ether-based rubber (FFKM), tetrafluoroethylene-based rubber (TFE), or two or more of them.

According to the fourth embodiment of the present disclosure, there is provided the electrode as defined in any one of the first to the third embodiments, wherein the weight ratio of the binder to the fluoro-elastomer is 40:60-80:20.

According to the fifth embodiment of the present disclosure, there is provided the electrode as defined in any one of the first to the fourth embodiments, which has a flexural resistance of 2-8 mm Φ.

According to the sixth embodiment of the present disclosure, there is provided the electrode as defined in any one of the first to the fifth embodiments, wherein the flexural resistance of the electrode is evaluated according to the method of Test Standard JIS K5600-5-1.

According to the seventh embodiment of the present disclosure, there is provided the electrode as defined in any one of the first to the sixth embodiments, wherein the flexural resistance of the electrode is evaluated through the steps of:

preparing a rectangular-shaped electrode sample having a size of 100 mm x 50 mm;
preparing test rods each having a diameter of 2, 3, 4, 5, 6, 8, 10, 12, 16, 20, 25 or 32 mm, selecting the test rod having the largest diameter and allowing the electrode sample to be in contact with the test rod, and judging whether cracks are generated in the mixture film of the electrode sample or not, when both ends of the electrode sample are lifted; and
selecting the test rod having the second largest diameter if any cracks are not generated in the preceding step and judging whether cracks are generated in the mixture film of the electrode sample or not in the same manner as the preceding step, and repeating this step to determine the minimum diameter value of the test rod causing no cracks of the mixture film of the electrode sample as flexural resistance.

According to the eighth embodiment of the present disclosure, there is provided the electrode as defined in any one of the first to the seventh embodiments, wherein the binder has a crystallization degree of 10% or less.

According to the ninth embodiment of the present disclosure, there is provided the electrode as defined in any one of the first to the eighth embodiments, wherein the binder includes a fluorine-containing binder, the electrode layer has a QBR (Quantified Binder Ratio) of 1.1 or less, and the QBR is defined by the following formula:

$$QBR = Bs/Bf,$$

wherein Bs represents the average value of fluorine content in the surface region of the electrode layer ranging from the outermost surface of the electrode layer to up to 15% of the total thickness of the electrode layer, and Bf represents the average value of fluorine content of the bottom region of the electrode layer ranging from the electrode layer interface facing the current collector to up to 15% of the total thickness of the electrode layer.

According to the tenth embodiment of the present disclosure, there is provided the electrode as defined in any one of the first to the ninth embodiments, wherein the conductive material includes activated carbon, graphite, carbon black, ketjen black, carbon nanotubes, or two or more of them.

According to the eleventh embodiment of the present disclosure, there is provided the electrode as defined in any one of the first to the tenth embodiments, wherein the binder includes polytetrafluoroethylene (PTFE).

According to the twelfth embodiment of the present disclosure, there is provided the electrode as defined in any one of the first to the eleventh embodiments, wherein the active material is a positive electrode active material or a negative electrode active material.

According to the thirteenth embodiment of the present disclosure, there is provided the electrode as defined in any one of the first to the twelfth embodiments, wherein the content of the active material is 80-98 parts by weight, the content of the conductive material is 0.5-10 parts by weight, the content of the binder is 0.5-5 parts by weight, and the content of the fluoro-elastomer is 0.1-5 parts by weight.

According to the fourteenth embodiment of the present disclosure, there is provided the electrode as defined in any one of the first to the thirteenth embodiments, wherein the current collector further includes a conductive primer layer on at least one surface thereof.

According to the fifteenth embodiment of the present disclosure, there is provided the electrode as defined in any one of the first to the fourteenth embodiments, wherein the electrode layer is derived from a dry electrode film.

According to the sixteenth embodiment of the present disclosure, there is provided a method for manufacturing the electrode as defined in any one of the first to the fifteenth embodiments, including the steps of:

preparing a mixture containing an active material, a conductive material, a binder and a fluoro-elastomer;

kneading the mixture at 70-200°C under a pressure equal to or higher than ambient pressure to prepare mixture lumps;

pulverizing the mixture lumps to obtain a mixed powder for an electrode;

introducing the mixed powder for an electrode between a plurality of rolls to carry out calendering, thereby forming an electrode film; and

laminating the electrode film on a metallic current collector.

According to the seventeenth embodiment of the present disclosure, there is provided the method for manufacturing the electrode as defined in the sixteenth embodiment, wherein the step of kneading the mixture to prepare mixture lumps is carried out in a kneader under a pressure equal to or higher than ambient pressure.

According to the eighteenth embodiment of the present disclosure, there is provided the method for manufacturing the electrode as defined in the sixteenth or the seventeenth embodiment, wherein the electrode film has a pressing ratio of 20% or less.

According to the nineteenth embodiment of the present disclosure, there is provided a secondary battery including a positive electrode, a negative electrode and a separator interposed between the positive electrode and the negative electrode, wherein at least one of the positive electrode and the negative electrode is the electrode as defined in any one of the first to the fifteenth embodiments.

According to the twentieth embodiment of the present disclosure, there is provided an energy storage system including the secondary battery as defined in the nineteenth embodiment as a unit cell.

Advantageous Effects

Electrodes fundamentally have brittleness, and are easily broken when impact or deformation is generated. The electrode according to an embodiment of the present disclosure includes a fluoro-elastomer having high elastic deformation property added to particles for manufacturing a dry electrode, and thus it is possible to improve the property of the electrode breaking when impact or deformation is generated. In this manner, it is possible to provide an electrode having excellent flexibility (flexural resistance) and good handling property.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a schematic view illustrating the electrode according to an embodiment of the present disclosure.

FIG. 2 is a schematic view illustrating calculation of the QBR value of an electrode layer.

FIG. 3a and FIG. 3b are schematic views illustrating the process for manufacturing an electrode film applied to the electrode assembly according to an embodiment of the present disclosure.

FIG. 4 is a schematic view illustrating the electrode lamination step according to an embodiment of the present disclosure.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise.

It will be further understood that the terms "comprises" and/or "comprising", or "includes" and/or "including" when used in this specification, do not preclude the presence of other elements but specify the additional presence of other elements, unless otherwise stated.

In one aspect of the present disclosure, there is provided an electrode which includes:

an electrode current collector; and
an electrode layer disposed on the electrode current collector and containing an active material, a conductive material, a binder and a fluoro-elastomer, and
has a flexural resistance of 10 mm $\Phi$ or less.

According to an embodiment of the present disclosure, the electrode may be a positive electrode or a negative electrode, and the active material may be a positive electrode active material or a negative electrode active material.

For example, the positive electrode active material includes, but are not limited to: lithium transition metal oxides; lithium metal iron phosphates, lithium nickel-manganese-cobalt oxides; lithium nickel-manganese-cobalt oxides partially substituted with other transition metals; or two or more of them. Particular examples of the positive electrode active material may include, but are not limited to: layered compounds, such as lithium cobalt oxide ($LiCoO_2$) and lithium nickel oxide($LiNiO_2$), or those compounds substituted with one or more transition metals; lithium manganese oxides, such as $Li_{1+x}Mn_{2-x}O_4$ (wherein x is 0-0.33), $LiMnO_3$, $LiMn_2O_3$ and $LiMnO_2$; lithium coper oxide ($Li_2CuO_2$); vanadium oxides, such as $LiV_3O_8$, $LiV_3O_4$, $V_2O_5$ or $Cu_2V_2O_7$; Ni site-type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); lithium metal phosphates $LiMPO_4$ (wherein M is Fe, CO, Ni or Mn); lithium nickel-manganese-cobalt oxides $Li_{1+x}(Ni_aCo_bMn_e)_{1-x}O_2$ (x is 0-0.03, a is 0.3-0.95, b is 0.01-0.35, c is 0.01-0.5, a + b + c = 1); lithium nickel-manganese-cobalt oxides partially substituted with aluminum (lithium-nickel-manganese-cobalt-aluminum oxide) $Li_a[Ni_bCo_cMn_dAl_e]_{1-f}M^1_fO_2$, (wherein $M^1$ is at least one selected from the group consisting of Zr, B, W, Mg, Ce, Hf, Ta, La, Ti, Sr, Ba, F, P and S, $0.8 \leq a \leq 1.2$, $0.5 \leq b \leq 0.99$, $0 < c < 0.5$, $0 < d < 0.5$, $0.01 \leq e \leq 0.1$, and $0 \leq f \leq 0.1$); disulfide compounds; $Fe_2(MoO_4)_3$; or the like. Particularly, the lithium nickel-manganese-cobalt-aluminum oxide may include $Li[Ni_{0.73}Co_{0.0s}Mn_{0.15}Al_{0.02}]O_2$), or the like.

In addition, non-limiting examples of the negative electrode active material include: carbon, such as non-graphitizable carbon or graphite-based carbon; metal composite oxides, such as $Li_xFe_2O_3$ ($0 \leq x \leq 1$), $Li_xWO_2$ ($0 \leq x \leq 1$) and $Sn_xMe_{1-x}Me'_yO_2$ (Me: Mn, Fe, Pb, Ge; Me': Al, B, P, Si, elements of Group 1, 2 or 3 in the Periodic Table, halogen; $0 < x \leq 1$; $1 \leq y \leq 3$; $1 \leq z \leq 8$); lithium metal; lithium alloy; silicon-based alloy; tin-based alloy; silicon-based oxides, such as SiO, SiO/C and $SiO_2$; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; and conductive polymers, such as polyacetylene; Li-Co-Ni-based materials, or the like.

According to an embodiment of the present disclosure, the electrode may be a positive electrode. Therefore, particularly, the active material may be a positive electrode active material. More particularly, the positive electrode active material may include lithium transition metal oxide, lithium nickel-manganese-cobalt oxide, lithium nickel-manganese-cobalt oxide partially substituted with Al or another transition oxide, lithium iron phosphate, or the like.

The conductive material is not particularly limited, as long as it has conductivity while not causing any chemical change in the corresponding battery. Particular examples of the conductive material include: graphite, such as natural graphite or artificial graphite; carbonaceous materials, such as carbon black, acetylene black, ketjen black, channel black, furnace black, lamp black, thermal black or carbon fibers; metal powder or metal fibers, such as copper, nickel, aluminum or silver; needle-like or branch-like conductive whisker, such as zinc oxide whisker, calcium carbonate whisker, titanium dioxide whisker, silicon oxide whisker, silicon carbide whisker, aluminum borate whisker, magnesium borate whisker, potassium titanate whisker, silicon nitride whisker, silicon carbide whisker or alumina whisker; conductive metal oxide, such as titanium dioxide; conductive polymer such as a polyphenylene derivative; or the like. Such conductive materials may be used alone or in combination. Particularly, the conductive material may include at least one selected from the group consisting of activated carbon, graphite, carbon black and carbon nanotubes, and more particularly, activated carbon, with a view to homogeneous mixing of the conductive material and improvement of conductivity.

The binder may include a fluorine-containing binder, a fluorine-free binder, or two or more of them. The fluorine-containing binder may include a fluorine-containing polymer, and particular examples thereof include polytetrafluoroethylene (PTFE), polyvinylidene fluoride (PVdF), PVdF-based copolymer, such as polyvinylidene fluoride-co-hexafluoropropylene (PVdF-HFP), or two or more of them. Particularly, the fluorine-containing binder may include polytetrafluoroethylene (PTFE). In addition, the fluorine-containing binder may include polytetrafluoroethylene alone, or may further include at least one selected from polyvinylidene fluoride (PVdF) and PVdF-based copolymer, such as polyvinylidene fluoride-co-hexafluoropropylene (PVdF-HFP), besides polytetrafluoroethylene. The fluorine-free binder may include polyolefin, polyethylene oxide (PEO), or the like.

In general, elastomer is also called rubber frequently and refers to a chemically crosslinked polymer. Since the crosslinking structure of the elastomer has a density significantly lower than that of a thermosetting resin, the elastomer has a larger elastic zone between the crosslinking points, and such zones impart elasticity to the elastomer. Herein, elasticity refers to the property of an object elongating when pulled or pressed, and trying to return to its original state when the force is removed.

The fluoro-elastomer (fluoro-carbon, fluorinated rubber) is high-performance rubber and shows excellent resistance against high temperature, ozone, climate condition, oxygen, mineral oil, fuel, hydraulic oil, aromatic compounds and various organic solvents and chemicals.

The fluoro-elastomer is not particularly limited, and any known fluoro-rubber used for forming a molded body may be used. Particular examples of the fluoro-elastomer include fluorovinylidene-based rubber (FKM), tetrafluoroethylenepropylene-based rubber (FEPM), tetrafluoroethylene-perfluoromethylvinyl ether-based rubber (FFKM), tetrafluoroethylene-based rubber (TFE), or the like. Such fluoro-elastomers may be used alone or in combination.

Among the fluoro-elastomers, fluorovinylidene-based rubber (FKM) and tetrafluoroethylenepropylene-based rubber (FEPM) may be more preferred.

The flourovinylidene-based rubber (FKM) includes vinylidene fluoride as a main ingredient and is a fluoro-elastomer having excellent heat resistance, oil resistance, chemical resistance, solvent resistance, processability, or the like. Although FKM is not particularly limited, particular examples of FKM may include a bipolymer including vinylidene fluoride and hexafluoropropylene, bipolymer including vinylidene fluoride and tetrafluoroethylene, terpolymer including vinylidene fluoride, hexafluoropropylene and tetrafluoroethylene, quaterpolymer including vinylidene fluoride, hexafluoropropylene, tetrafluoroethylene and a vulcanization site monomer, or the like. Particular examples of the commercially available products include 'Viton (registered trademark)' of Dupont Elastomer Co., 'DAIEL (registered trademark) G' of Daikin Industries Co., Ltd., or the like. Among the above-listed examples, a quaterpolymer including vinylidene fluoride, hexafluoropropylene, tetrafluoroethylene and a vulcanization site monomer is preferred. For example, the quaterpolymer is commercially available as 'Viton GBL-200S' (Dupont Elastomer Co.)

The tetrafluoroethylenepropylene-based rubber (FEPM) is based on an alternating copolymer of tetrafluoroethylene (TFE) with propylene (P) and is a fluoro-elastomer having excellent heat resistance, chemical resistance, polar solvent resistance, steam resistance, or the like. Non-limiting examples of FEPM include a bipolymer including tetrafluoroethylene (TFE) with propylene (P), terpolymer including tetrafluoroethylene (TFE), propylene (P) and vinylidene fluoride (VDF), terpolymer including tetrafluoroethylene (TFE), propylene (P) and a crosslinking site monomer (CSM). Particular examples of the commercially available products of the biopolymer including tetrafluoroethylene (TFE) and propylene (P) include 'Aflas (registered trademark) 100' and 'Aflas 150' of Asahi Glass Co., Ltd. Particular examples of the commercially available products of the terpolymer including tetrafluoroethylene (TFE), propylene (P) and vinylidene fluoride (VDF) include 'Aflas 200' of Asahi Glass Co., Ltd. Particular examples of the commercially available products of the terpolymer including tetrafluoroethylene (TFE), propylene (P) and a crosslinking site monomer (CSM) include 'Aflas 300' of Asahi Glass Co., Ltd.

The tetrafluorothylene-perfluoromethylvinyl ether-based rubber (FFKM) may include tetrafluoroethylene (TFE)-perfluoro(alkylvinyl ether)-based copolymer, TFE-perfluoro(alkoxyalkylvinylether)-based copolymer, or the like. Such copolymers may further include a structural unit derived from another perfluoro-monomer. The perfluoro(alkylvinylether) forming the tetrafluoroethylene (TFE)-perfluoro(alkylvinyl ether)-based copolymer may have a C1-C10 alkyl group, and particular examples of the perfluoro(alkylvinylether) include perfluoro(methylvinlether), perfluoro(ethylvinylether), perfluoro(propylvinylether), or the like, and preferably, perfluoro(methylvinylether). The perfluoro(alkoxyalkylvinyl ether) forming the TFE-perfluoro(alkoxyalkylvinyl ether)-based copolymer may include a C3-C15 group bound to a

vinylether group (CF$_2$=CFO-), and particular examples of the perfluoro(alkoxyalkylvinylether) include CF$_2$=CFOCF$_2$CF(CF$_3$)OC$_n$F$_{2n+1}$, CF$_2$=CFO(CF$_2$)$_3$OC$_n$F$_{2n+1}$, CF$_2$=CFOCF$_2$CF(CF$_3$)O (CF$_2$O)$_m$C$_n$F$_{2n+1}$, or CF$_2$=CFO(CF$_2$)$_2$OC$_n$F$_{2n+1}$. In the above chemical formulae, n may be 1-5, and for example, 1-3.

It is possible to impart crosslinkability to FFKM through the copolymerization with a crosslinking site monomer (by incorporating a structural unit derived from a crosslinking site monomer). Herein, 'crosslinking site' refers to a site capable of crosslinking. For example, the crosslinking site may include a nitrile group, a halogen group (such as I, Br, or the like), a perfluorophenyl group, or the like.

A typical example of the crosslinking site monomer having a nitrile group as a crosslinking site is a nitrile group-containing perfluorovinyl ether. Particular examples of the nitrile group-containing perfluorovinyl ether include CF$_2$=CFO(CF$_2$)$_n$OCF(CF$_3$)CN (wherein n may be 2-4), CF$_2$=CFO(CF$_2$)$_n$CN (wherein n may be 2-12), CF$_2$=CFO [CF$_2$CF(CF$_3$)O]$_m$(CF$_2$)$_n$CN (wherein n may be 2, and m may be 1-5), CF$_2$=CFO[CF$_2$CF(CF$_3$)O]$_m$(CF$_2$)$_n$CN (wherein n may be 1-4, and m may be 1-2), CF$_2$=CFO[CF$_2$CF(CF$_3$)O]$_n$CF$_2$CF(CF$_3$)CN (wherein n may be 0-4), or the like.

A typical example of the crosslinking site monomer having a halogen group as a crosslinking stie is a perfluorovinyl ether. Particular examples of the halogen group-containing perfluorovinyl ether include the above-listed examples of the nitrile group-containing perfluorovinyl ether in which the nitrile group is substituted with a halogen group. Particular examples of the commercially available products of FFKM include 'Kalrez' of Dupont Co.

According to an embodiment of the present disclosure, the fluoro-elastomer may include no double bond in its main chain. When the main chain of the fluoro-elastomer includes no double bond, it is possible to prevent the problem of oxidation at a high electric potential.

The electrode obtained according to the present disclosure further includes a fluoro-elastomer having high elastic deformation property in its electrode layer in addition to an active material, a conductive material and a binder, and thus it is possible to improve the property of the electrode breaking when impact or deformation is generated. In this manner, it is possible to provide an electrode having excellent flexibility.

When a non-fluorinated elastomer, such as styrene butadiene rubber (SBR) including a double bond, is present, oxidation occurs at a high electric potential, which may result in degradation of the performance of a battery. In the case of acrylonitrile butadiene rubber (NBR) including a double bond, it may be used in a battery after being hydrogenated for the cleavage of the double bond, but there is a limitation in that flexural resistance cannot be improved.

The electrode according to the present disclosure includes a fluoro-elastomer, instead of a conventional, i.e. non-fluorinated elastomer. Therefore, the elastomer structure includes no double bond, and thus shows excellent chemical resistance and solvent resistance and realizes excellent flexural resistance.

The flexibility of the electrode may be evaluated in terms of flexural resistance.

According to the present disclosure, the electrode has a flexural resistance of 10 mm Φ or less. According to an embodiment of the present disclosure, the electrode may have a flexural resistance of 8 mm Φ or less, 5 mm Φ or less, 2-10 mmΦ, 2-8 mmΦ, 2-5 mmΦ, 2-4 mmΦ, 4-5 mmΦ, or 2-3 mmΦ.

The flexural resistance may be evaluated according to the method of Test Standard JIS K5600-5-1. Particularly, the flexural resistance of the electrode may be determined by allowing the electrode to be in contact with test rods having different diameters and lifting both ends of the electrode to judge whether cracks are generated or not and to determine the minimum diameter causing no cracks.

According to an embodiment of the present disclosure, the flexural resistance of the electrode is evaluated through the steps of:

preparing a rectangular-shaped electrode sample having a size of 100 mm x 50 mm;
preparing test rods each having a diameter of 2, 3, 4, 5, 6, 8, 10, 12, 16, 20, 25 or 32 mm, selecting the test rod having the largest diameter and allowing the electrode sample to be in contact with the test rod, and judging whether cracks are generated in the mixture film of the electrode sample or not, when both ends of the electrode sample are lifted; and selecting the test rod having the second largest diameter if any cracks are not generated in the preceding step and judging whether cracks are generated in the mixture film of the electrode sample or not in the same manner as the preceding step, and repeating this step to determine the minimum diameter value of the test rod causing no cracks of the mixture film of the electrode sample as flexural resistance.

According to an embodiment of the present disclosure, the binder is fibrilized to bind the active material, the conductive material and the fluoro-elastomer. The electrode may include a fibrilized binder as a means for binding the active material, the conductive material and the fluoro-elastomer, and such a fibrilized binder shows less cutting as compared to the conventional non-fibrilized binders, has excellent elongation property in the longitudinal direction, and thus can improve the flexibility of the electrode layer and the electrode including the same. The fibrilization process of the binder will be explained in more detail in the part of a method for manufacturing an electrode as described hereinafter.

According to an embodiment of the present disclosure, the content of the active material may be 85-98 parts by weight, the content of the conductive material may be 0.5-5 parts by weight, the content of the binder may be 0.5-10 parts by weight, and the content of the fluoro-elastomer may be 0.1-5 parts by weight.

In addition, the content of the active material may be 90-98 parts by weight, the content of the conductive material may be 0.5-5 parts by weight, the content of the binder may be 0.5-5 parts by weight, and the content of the fluoro-elastomer may be 0.2-5 parts by weight.

When the content of the active material, that of the conductive material, that of the binder and that of the fluoro-elastomer satisfy the above-defined ranges, the binder may be sufficiently fibrilized in the subsequent kneading step to form mixture lumps, an electrode film may be obtained with ease through the molding of a mixed powder formed through a pulverization step, the physical properties of the electrode film may be ensured, the content of the active material may be ensured to prevent the problem of a decrease in capacity, and sufficient conductivity may be ensured.

Meanwhile, a filler as an ingredient for inhibiting electrode swelling may be further introduced optionally to the electrode layer. The filler is not particularly limited, as long as it is a fibrous material, while not causing any chemical change in the corresponding battery. Particular examples of the filler include: olefinic polymers, such as polyethylene or polypropylene; fibrous materials, such as glass fibers or carbon fibers; or the like.

According to an embodiment of the present disclosure, the weight ratio of the binder to the fluoro-elastomer may be 40:60-80:20, 50:50-75:25, or 50:50-65:35. When the weight ratio satisfies the above-defined range, it is possible to improve the property of the electrode breaking when impact or deformation is generated, and thus to provide an electrode having excellent flexibility (flexural resistance) and good handling property.

The current collector is not particularly limited, as long as it has high conductivity, while not causing any chemical change in the corresponding battery. Particular examples of the current collector include stainless steel, aluminum, nickel, titanium, baked carbon, copper, aluminum or stainless steel surface-treated with carbon, nickel, titanium, silver, or the like. In addition, fine surface irregularities may be formed on the surface of the current collector to enhance the binding force with the positive electrode active material. The current collector may be used in various shapes, including a film, a sheet, a foil, a net, a porous body, a foamed body, a non-woven web, or the like.

Further, the current collector may be totally or partially coated with a conductive primer layer in order to reduce the resistance at the surface and to improve the adhesion. Herein, the conductive primer layer may include a conductive material and a binder for a primer layer. The conductive material is not particularly limited, as long as it has conductivity. For example, the conductive material may include a carbonaceous material, metallic material (metal powder or metal fibers), conductive whisker, conductive metal oxide, conductive polymer, or the like. The carbonaceous material may include natural graphite, artificial graphite, graphene, carbon black, denka black, acetylene black, ketjen black, Super-P, channel black, furnace black, lamp black, thermal black, carbon nanotubes, graphite nanofibers, carbon nanofibers, or the like. The metallic material may include copper, nickel, aluminum, silver, or the like, the conductive whisker may include zinc oxide whisker, calcium carbonate whisker, titanium dioxide whisker, silicon oxide whisker, silicon carbide whisker, aluminum borate whisker, magnesium borate whisker, potassium titanate whisker, silicon nitride whisker, silicon carbide whisker, alumina whisker, or the like, the conductive metal oxide may include titanium dioxide, or the like, and the conductive polymer may include a polyphenylene derivative, or the like. Such materials may be used alone or in combination.

The binder for a primer layer may be a fluorine-based binder (including PVDF and PVDF copolymer) or acrylic binder that can be dissolved in a solvent, and may include an aqueous binder, such as styrene butadiene rubber (SBR).

The electrode layer of the electrode may have a porosity of 20-50%, 20-45%, 20-40%, 20-35%, 22-30%, 20-28%, 20-26%, 23.1-27.4%, 23.1-24.8%, 23-26%, or 24.8-27.4%. The porosity may vary slightly depending on what effect is focused on, or the like.

When the porosity of the electrode layer satisfies the above-defined range, it is possible to facilitate wetting with an electrolyte, resulting in improvement of life characteristics, output characteristics, or the like. In addition, energy density based on volume can be improved, since the volume required to realize the same capacity is not increased.

The porosity of the electrode layer may be obtained by subtracting the volume and weight of the current collector from the volume and weight of the electrode to determine the apparent density of the mixture film alone and by using the true density calculated based on the true density of each ingredient and composition, according to the following Formula:

$$\text{Porosity } (\%) = \{1 - (\text{Apparent density}/\text{True density})\} \times 100$$

According to an embodiment of the present disclosure, the binder in the electrode layer may have a crystallization degree of 10% or less.

According to the present disclosure, the crystallization degree (Xc) of the binder may be determined by using differential scanning calorimetry (DSC) based on the temperature (peak temperature) at the point where the highest enthalpy appears during the crystallization. Particularly, the crystallization degree is calculated by dividing the enthalpy of melting ($\beta$ value) measured actually through DSC by the enthalpy of melting ($\beta$ heat of melting at equilibrium) of theoretically perfect crystals (crystallization degree 100%) and expressed in the unit of %, and may be calculated according to the following Formula 1. Herein, the enthalpy of melting of theoretically perfect crystals may refer to Polymer Handbook in the case of a known polymer, and the enthalpy of melting of theoretically perfect crystals in the case of an unknown material or newly synthesized material may be calculated by the extrapolation method of extending crystallization degrees of two or more points.

[Formula 1]

$$Xc\ (\%) = (\beta_m / \beta_m^\circ) \times 100$$

According to an embodiment of the present disclosure, the binder includes a fluorine-containing binder, and the electrode layer may have a QBR (Quantified Binder Ratio) of 1.1 or less.

Herein, QBR is defined by the following formula:

$$QBR = Bs/Bf,$$

wherein Bs represents the average value of fluorine content in the surface region of the electrode layer ranging from the outermost surface of the electrode layer to up to 15% of the total thickness of the electrode layer, and Bf represents the average value of fluorine content of the bottom region of the electrode layer ranging from the electrode layer interface facing the current collector to up to 15% of the total thickness of the electrode layer.

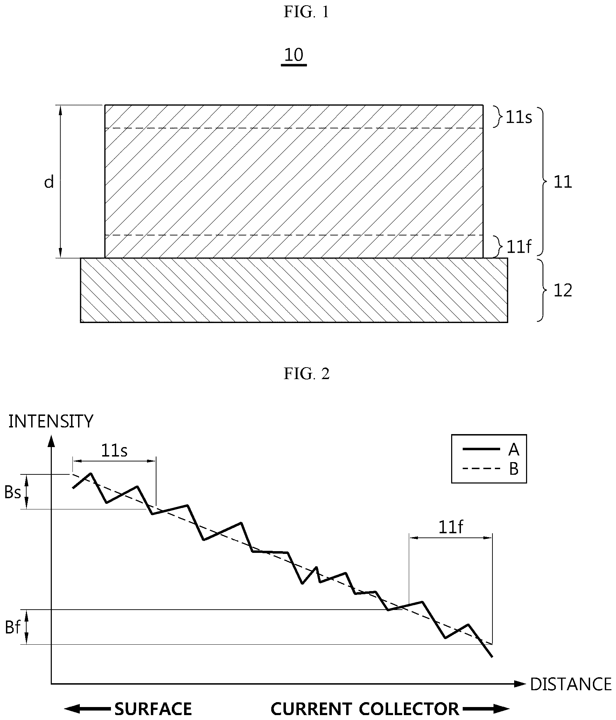

FIG. 1 is a schematic view illustrating the electrode according to an embodiment of the present disclosure. Referring to FIG. 1, the electrode 10 includes: an electrode current collector 12; and an electrode layer 11 positioned on the electrode current collector 12, and including an electrode active material and a binder. Herein, the electrode layer may optionally further include a conductive material as mentioned above.

The electrode layer 11 has, based on its total thickness d, an electrode layer surface region 11s ranging from the outermost surface of the electrode layer to up to 15% of the total thickness d of the electrode layer, and an electrode layer bottom region 11f ranging from the electrode layer interface facing the current collector to up to 15% of the total thickness d of the electrode layer.

In the mathematical formula of QBR, Bs represents the average vale of fluorine content in the electrode layer surface region 11s, and Bf represents the average value of fluorine content in the electrode layer bottom region 11f.

Herein, QBR may be calculated by the following method.

First, an electrode, QBR of which is to be determined, is selected, and the section of the electrode is obtained by using argon ion milling. Next, an energy dispersive X-ray spectroscopy (EDS) detector of a scanning electronic microscopy (SEM) instrument is used to perform EDS mapping of the ingredients in the electrode layer of the electrode section.

Then, a line profile is extracted from the EDS mapping results in the electrode layer thickness direction, and the average value Bs of fluorine content of the fluorine-containing binder of the electrode layer surface region and the average value Bf of the fluorine content of the fluorine-containing binder of the electrode layer bottom region are extracted from the line profile results. After that, QBR is calculated by using the following Formula:

$$QBR = Bs/Bf$$

Herein, the electrode layer surface region is a zone ranging from the outermost surface of the electrode layer to up to 15% of the total thickness d of the electrode layer in the thickness direction of the electrode layer, and the electrode layer bottom region is a zone ranging from the electrode layer interface facing the current collector to up to 15% of the total thickness d of the electrode layer.

FIG. 2 is a schematic view illustrating calculation of the QBR value of an electrode layer. Referring to FIG. 2, X-axis represents the thickness of the electrode layer, i.e. distance from the surface toward the current collector, and Y-axis represents the intensity of fluorine ingredient. Line A represents the intensity of fluorine ingredient of the fluorine-containing binder extracted through EDS mapping of fluorine ingredient in the electrode layer of the electrode section, and line B represents a tendency line showing a tendency of line A and is plotted by the LOWESS smoothing method, i.e. through smoothing in a locally-weighted scatter plot smoother mode.

The QBR value is a value illustrating the uniformity of the distribution of the fluorine-containing binder in the thickness direction of the electrode layer by means of the ratio of the content of fluorine-containing binder contained in the surface region of the electrode layer based on the content of fluorine-containing binder contained in the bottom region of the electrode layer. Herein, the content of fluorine-containing binder may be inferred through the fluorine ingredient contained in the fluorine-containing binder.

The QBR value is 1.1 or less. According to an embodiment of the present disclosure, the QBR value may be 0.95 or more, 0.97 or more, 1.03 or less, or 1.05 or less, or 0.95-1.05.

When the QBR value satisfies the above-defined range of 1.1 or less, there is no problem of an increase in the content of fluorine-containing binder contained in the surface region of the electrode layer based on the content of fluorine-containing binder contained in the bottom region of the electrode layer, caused by the migration of the fluorine-containing binder. As a result, the binder distribution in the thickness direction of the electrode layer becomes uniform, and the content of binder at the portion near the current collector is not reduced, and thus the adhesion between the current collector and the electrode layer is improved, and the conductivity on the electrode layer surface and charge/discharge rate are also improved.

Particular examples of the fluorine-containing binder include polytetrafluoroethylene (PTFE), polyvinylidene fluoride (PVdF), PVdF-based copolymer, such as polyvinylidene fluoride-co-hexafluoropropylene (PVdF-HFP), or two or more of them. In addition, the fluorine-containing binder may include polytetrafluoroethylene alone, or polytetrafluoroethylene in combination with at least one selected from polyvinylidene fluoride (PVdF) and PVdF-based copolymer, such as polyvinylidene fluoride-co-hexafluoropropylene (PVdF-HFP).

The electrode layer may be derived from a dry electrode film. Herein, the dry electrode film refers to an electrode film obtained through a dry electrode manufacturing process using no dispersion medium, unlike a conventional wet electrode manufacturing process including preparing a slurry by dissolving and/or dispersing an active material, a conductive material and a binder in a dispersion medium, such as water or an organic solvent and applying the slurry onto a current collector, followed by drying. The obtained electrode film is laminated on a current collector subsequently to provide a finished electrode. The methods for manufacturing the electrode film and the electrode will be explained in more detail hereinafter.

In another aspect of the present disclosure, there is provided a method for manufacturing the electrode according to the present disclosure, including the steps of:

preparing a mixture containing an active material, a conductive material, a binder and a fluoro-elastomer;
kneading the mixture at 70-200°C under a pressure equal to or higher than ambient pressure to prepare mixture lumps;
pulverizing the mixture lumps to obtain a mixed powder for an electrode;
introducing the mixed powder for an electrode between a plurality of rolls to carry out calendering, thereby forming an electrode film; and
laminating the electrode film on a current collector.

Hereinafter, the method for manufacturing an electrode according to the present disclosure will be explained in more detail.

First, a mixture containing an active material, a conductive material, a binder and a fluoro-elastomer is prepared.

Herein, the mixing for preparing the mixture is carried out in such a manner that the active material, the conductive material, the binder and the fluoro-elastomer may be distributed homogeneously. In addition, since the mixture is mixed in the form of a powder, any mixing process capable of simple mixing of the ingredients may be used with no particular limitation, and the ingredients may be mixed through various processes. However, since the electrode according to the present disclosure is manufactured through a dry process using no dispersion medium, the mixing may be carried out through a dry mixing process, and the ingredients may be introduced to an instrument, such as a blender, to carry out the mixing.

In addition, the mixing may be carried out in a mixer at 5,000-20,000 rpm for 30 seconds to 2 minutes, particularly, at 10,000-15,000 rpm for 30 seconds to 1 minute to ensure homogeneity.

According to an embodiment of the present disclosure, a super-mixer may be used in the mixing step for preparing the mixture, and particularly, the mixing step may be carried out in a super-mixer at 1,000-2,000 rpm for 5-10 minutes

The binder is not particularly limited, as long as it is capable of fine fibrilization by the step of preparing the mixed powder. The fine fibrilization refers to treatment of finely dividing a polymer, and for example, may be carried out by using mechanical shear force, or the like. Particular examples of the binder are the same as described above.

Next, the mixture is kneaded at 70-200°C under a pressure equal to or higher than ambient pressure to prepare mixture lumps.

According to the related art, high-shear mixing, such as jet milling, was carried out to fibrilize a binder. However, in this case, there is a problem in that an active material is micronized by the mixing and the resultant fibers may be cut. According to the present disclosure, the problem is solved by using a low-shear kneading process instead of high-shear mixing.

The kneading is not limited to a particular process. According to an embodiment of the present disclosure, the kneading may be carried out through a kneader, or the like.

The kneading step is a step of binding or connecting the active material, the conductive material and the fluoro-elastomer, while the binder is fibrilized, thereby forming mixture lumps having a solid content of 100%. In addition, during the kneading step, the fluoro-elastomer may have improved flowability at 80°C or higher and may be dispersed homogeneously.

Particularly, the kneading may be controlled to a kneading rate of 10-100 rpm. For example, the kneading rate may be controlled to 20-70 rpm within the above-defined range. The kneading may be carried out for 1-30 minutes.

For example, the kneading may be carried out at a rate of 20-50 rpm for 3-10 minutes within the above-defined ranges. Meanwhile, the kneading may be controlled to a shear rate of 10/s to 500/s. According to an embodiment of the present disclosure, the kneading may be carried out for 1-30 minutes, and the shear rate may be controlled to 30/s to 100/s.

In addition, the kneading step may be carried out at high temperature under a pressure condition of ambient pressure or higher, particularly, a pressure condition higher than ambient pressure.

More particularly, the kneading of the mixture may be carried out at 70-200°C, specifically 90-150°C.

When the kneading is carried out at a low temperature beyond the above-defined temperature range, it is not possible to perform the fibrilization of the binder during the kneading and lump formation through kneading sufficiently. As a result, it is not possible to form a film with ease during calendering. On the other hand, when the kneading is carried out at an excessively high temperature, the binder may be fibrilized rapidly, and the resultant fibers may be cut by excessive shear force, undesirably.

In addition, the kneading may be carried out under a pressure equal to or higher than ambient pressure, or under a pressure of 1-60 atm, 1-30 atm, 1-10 atm, 1-8 atm, 1.1-7 atm, or 1.1-6 atm.

When the above-defined pressure range is satisfied, it is possible to prevent the problems of cutting of the resultant fibers, caused by the application of excessive shear force and pressure, and an excessive increase in the density of the mixture lumps. In other words, according to the present disclosure, it is possible to accomplish desired effects, when a low-shear mixing step is carried out at high temperature under a pressure condition equal to or higher than ambient pressure, instead of high-shear mixing.

In addition, according to an embodiment of the present disclosure, in order to improve the dispersibility of the fluoro-elastomer, a part of the active material or a part of the conductive material may be mixed and kneaded with the fluoro-elastomer preliminarily, and the preliminarily mixed and kneaded product is further mixed and kneaded with the remaining electrode materials.

Then, the mixture lumps are pulverized to obtain a mixed powder for an electrode.

Particularly, the mixture lumps prepared through the kneading may be directly subjected to calendering. However, in this case, it is required to press the mixture lumps to convert them into a thin film, and thus there is a problem in that uniform films cannot be obtained. Therefore, according to the present disclosure, the mixture lumps are subjected to a pulverization step. In other words, when the mixed powder for an electrode is excessively coarse or aggregated, bridges are formed in a calendering step to cause generation of defects, such as pinholes, in film appearance, or to produce a film having nonuniform surface properties. Therefore, the mixed powder for an electrode having a uniform size through the pulverization is obtained, and then calendering is carried out.

Herein, the pulverization step may be carried out by using a known pulverizing instrument, such as a blender or a grinder, but is not limited thereto. Particularly, the pulverization step may be carried out at a rate of 5,000-20,000 rpm for 30 seconds to 10 minutes, more particularly, at a rate of 10,000-18,000 rpm for 30 seconds to 2 minutes.

When the above-defined pulverization rate and time are satisfied, it is possible to carry out pulverization sufficiently, and thus to form a powder having a size suitable for filming and to prevent the problem of generation of a large amount of fine powder from the mixture limps. If necessary, a classification step for screening a powder having a size smaller or larger than a predetermined size may be carried out.

According to an embodiment of the present disclosure, a cutter mill, a fine mill, or the like, may be used in the pulverization step. Herein, the cutter mill may be used at 400-500 rpm for several seconds to pulverize the mixture lumps prepared through the kneading coarsely to a level of several millimeters. In addition, the fine mill may be used to pulverize the coarsely pulverized powder uniformly to a predetermined size or less and may be operated at 3,000-8,000 rpm.

After that, the mixed powder for an electrode is introduced between a plurality of rolls to carry out calendering, thereby forming an electrode film.

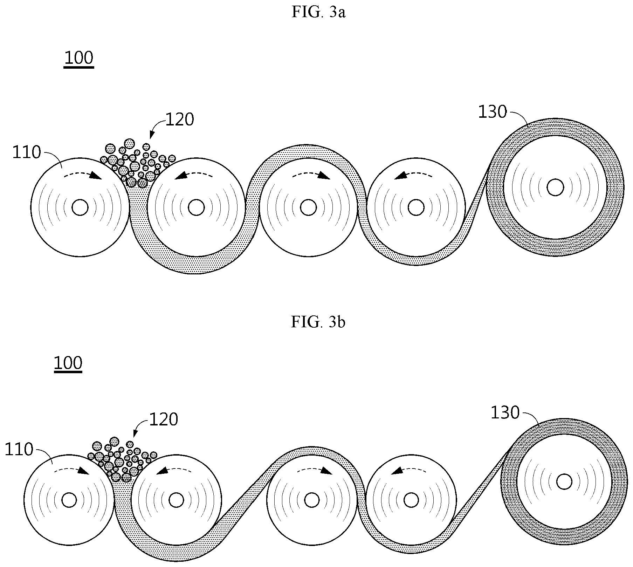

Referring to FIG. 3a and FIG. 3b, step 100 of forming an electrode film is illustrated, wherein a plurality of rolls 110 is disposed while being spaced apart from each other. The mixed powder 120 for an electrode obtained from the preceding step is introduced between the adjacent rolls 110, and the rolls 110 are rotated in the opposite direction. In this manner, the mixed powder 120 is pressed, and then is subjected to a powder sheeting step so that it may be molded into a sheet or a film. Then, calendering is carried out many times to obtain an electrode film having a final target thickness.

According to an embodiment of the present disclosure, the interval between the rolls may be controlled suitably considering the dimension or physical properties of an electrode film to be obtained in the step of forming an electrode film. For example, in FIG. 3b, the interval between the second roll and the third roll and the interval between the fourth roll and the fifth roll may be controlled to a larger value, as compared to FIG. 3a.

Particularly, the calendering includes processing the mixed powder for an electrode into the shape of a film. For example, the mixed powder for an electrode may be molded into a film having an average thickness of 50-300 $\mu$m.

For example, the calendering may be carried out by using rolls facing each other. According to an embodiment of the present disclosure, the calendering may be carried out repeatedly at least once, for example, once to five times, three or four times, or four times repeatedly.

Herein, the roll temperature may be 50-200°C.

The roll rotation speed ratio may be controlled suitably depending on the roll size, calendering number, electrode film thickness, or the like. For example, the roll rotation speed ratio may be controlled to a range of 1-10 times, 1-8 times, 1-7 times, or 1.2-5 times.

In addition, the gap between a pair of rolls facing each other may be controlled variably depending on the thickness and density of a film to be obtained.

After the calendering step is finished, a dry electrode film functioning as an electrode mixture may be obtained. The dry electrode film may also be called a free-sanding film according to the related art.

The resultant electrode film includes no solvent and has little flowability, and thus can be handled with ease and processed into a desired shape to be used for manufacturing electrodes with various shapes. In addition, when using the electrode film according to the present disclosure for manufacturing an electrode, a drying step for removing a solvent can be eliminated, and thus the production processability of the electrode can be improved significantly, and the problems of the methods for manufacturing a dry electrode according to the related art, such as the brittleness of an active material or cutting of a fibrilized binder, can be solved.

Meanwhile, according to an embodiment of the present disclosure, the electrode film may have a porosity of 20-50%. Within the above-defined range, the porosity may be controlled to a value of 40% or less, or 30% or less. When the electrode film satisfies such a range of porosity, it is possible to facilitate wetting with an electrolyte, resulting in improvement of life characteristics, output characteristics, or the like. In addition, energy density based on volume can be improved, since the volume required to realize the same capacity is not increased. According to an embodiment of the present disclosure, the porosity may be obtained by determining the apparent density of the dry electrode film and by using the true density calculated based on the true density of each ingredient and composition, according to the following Formula:

$$\text{Porosity (\%)} = \{1 - (\text{Apparent density}/\text{True density})\} \times 100$$

After that, the electrode film is laminated on a metallic current collector.

The lamination step may be a step of pressing and adhering the electrode film obtained from the preceding step onto a current collector to a desired thickness. The lamination may also be carried out by using a lamination roll, wherein the lamination roll may be maintained at a temperature of 25-250°C.

According to an embodiment of the present disclosure, the electrode film may have a compression ratio of 30-50%, 35-50%, or 40-50%.

The compression ratio of the electrode film may be defined as the ratio of the compressed thickness of the electrode film at the moment of lamination, and may be represented by the following Formula 1:

[Formula 1]

$$\text{Compression ratio (\%)} = T_p/T_1 \times 100$$

wherein $T_p$ represents the pressurized thickness of an electrode film in the lamination step, and $T_1$ represents the thickness of the electrode film before the lamination step.

According to the present disclosure, the lamination step may be controlled to satisfy a specific compression ratio. In this manner, it is possible to provide the electrode film with adequate density and porosity, and to realize excellent adhesion between the electrode film and the current collector.

When the electrode film satisfies a compression ratio of 30-50%, the pressure applied to the electrode film is sufficient so that the adhesion between the electrode film and the current collector may be improved. In addition, it is possible to prevent the problem of detachment of the electrode film from the current collector after the lamination step, and to solve the problem of an undesired increase in density of the electrode film, a decrease in porosity of the electrode film as compared to a target porosity, or damages to the current collector.

According to an embodiment of the present disclosure, when the electrode film is laminated onto both surfaces of the current collector, the compression ratio (%) of Formula 1 may be expressed by the following Formula 2:

[Formula 2]

$$30 \le (T_1 + 0.5T_c - 0.5T_{gap})/T_1 \times 100 \le 50$$

wherein $T_1$ represents the thickness of an electrode film before the lamination step, $T_c$ represents the thickness of a current collector, and $T_{gap}$ represents an interval between a first pressing roll and a second pressing roll.

In addition, the electrode film subjected to the lamination step may have a pressing ratio of 20% or less, 18% or less, 15% or less, 5-15%, 6-15%, 7-15%, or 9-13%.

Herein, the pressing ratio may be defined as a ratio of the thickness of an electrode film after the lamination step based on the thickness of the electrode film before the lamination step, and may be represented by the following Formula 3:

[Formula 3]

$$\text{Pressing ratio (\%)} = (T_1 - T_2)/T_1 \times 100$$

wherein $T_1$ represents the thickness of an electrode film before the lamination step, and $T_2$ represents the thickness of the electrode film after the lamination step.

When the pressing ratio satisfies the above-defined range, it is possible to provide the resultant electrode film with adequate density and porosity, and to realize excellent adhesion between the electrode film and the current collector.

Before and after the lamination of the electrode film with the current collector, an increase in apparent density may be represented by the following Formula 4:

[Formula 4]

$$\text{Increase in apparent density (\%)} = (D_2 - D_1)/D_1 \times 100$$

wherein $D_1$ represents the apparent density ($g/cm^3$) of an electrode film before the lamination step, and $D_2$ represents the apparent density ($g/cm^3$) of the electrode film after the lamination step.

The electrode film may have an increase in apparent density of 5-30%, 7-25%, or 10-20%, before and after its lamination with the current collector.

Each of $D_1$ and $D_2$ that represents the apparent density of the electrode film may vary with the type of active material. According to an embodiment of the present disclosure, when the active material is lithium nickel-manganese-cobalt oxides $Li_{1+x}(Ni_aCo_bMn_c)_{1-x}O_2$ (x is 0-0.03, a is 0.3-0.95, b is 0.01-0.35, c is 0.01-0.5, a + b + c = 1), lithium nickel-manganese-cobalt oxides partially substituted with aluminum (lithium-nickel-manganese-cobalt-aluminum oxide) $Li_a[Ni_bCo_cMn_dAl_e]_{1-f}M^1_fO_2$ (wherein $M^1$ is at least one selected from the group consisting of Zr, B, W, Mg, Ce, Hf, Ta, La, Ti, Sr, Ba, F, P and S, $0.8 \le a \le 1.2$, $0.5 \le b \le 0.99$, $0 < c < 0.5$, $0 < d < 0.5$, $0.01 \le e \le 0.1$, and $0 \le f \le 0.1$), or the like, each of $D_1$ and $D_2$ may range from 2.75 $g/cm^3$ to 3.5 $g/cm^3$.

Meanwhile, when the electrode film satisfies the above-defined range of an increase in apparent density, it is possible to improve the adhesion between the electrode film and the current collector and to prevent the problem of a porosity beyond the target range or damages to the active material or current collector.

Such an increase in apparent density before and after the lamination of the electrode film with the current collector may be calculated by measuring the weight and thickness of the electrode film before lamination, measuring the weight and thickness of the electrode after lamination, and calculating the weight and thickness of the film from which the weight and thickness of the current collector are subtracted.

In addition, the dry electrode film may have an active material loading amount of 3-15 $mAh/cm^2$, particularly 4-10 $mAh/cm^2$.

Herein, the active material loading amount is a value calculated according to the following Formula 5:

Active material loading amount ($mAh/cm^2$) = Capacity (mAh/g) of active material x Weight ratio (wt%) of active material in dry electrode film x Weight per unit area ($g/cm^2$) of dry electrode film    [Formula 5]

In addition, the interfacial resistance between the electrode film and the current collector may be 5 $\Omega \cdot cm^2$ or less, particularly 2 $\Omega \cdot cm^2$ or less. Herein, the interfacial resistance may be calculated by determining the resistance value between the dry electrode film and the current collector layer as a potential difference measured among multiple probes, after applying an electric current of 100 $\mu A$ to the electrode through the multiprobe (MP) resistance test method. When the interfacial resistance satisfies the above-defined range, the secondary battery obtained subsequently may be provided with improved performance.

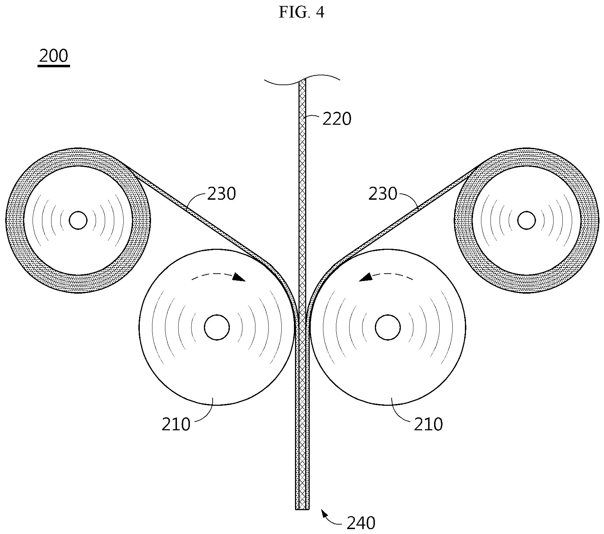

FIG. 4 is a schematic view illustrating the step of laminating an electrode film on both surfaces of a current collector according to an embodiment of the present disclosure. In other words, in lamination step 200, the electrode film 230 obtained from the preceding step may be pressed on and attached to a current collector 220 to a desired thickness by using a pair of lamination rolls 210, thereby providing a finished electrode 240.

In still another aspect of the present disclosure, there is provided an electrode obtained by the method for manufacturing an electrode as described above. In addition, there is provided a secondary battery including the electrode, wherein the electrode is a positive electrode, and an electrode assembly including the positive electrode, a negative electrode and a separator is received in a battery casing (cylindrical casing, prismatic casing, pouch, or the like) together with a lithium-containing nonaqueous electrolyte. There is also provided an energy storage system including the secondary battery as a unit cell.

Herein, since the particular structures of the secondary battery and the energy storage system are known to those skilled in the art, and detailed description thereof will be omitted in the present disclosure.

Meanwhile, according to an embodiment of the present disclosure, there is provided a system for manufacturing a dry electrode. The system includes: a blender configured to mix ingredients of an electrode mixture including an active material, a conductive material, a binder and a fluoro-elastomer; a kneader configured to knead the mixture of the ingredients to form mixture lumps; a pulverizer configured to pulverize the mixture lumps to form a mixed powder for an electrode; a calender configured to form a dry electrode film from the mixed powder for an electrode; and a lamination roll configured to dispose the dry electrode film on at least one surface of a current collector and to carry out lamination.

The blender is a mixer configured to mix the ingredients. As described above, the ingredients of the mixture may be mixed at a rate of 5,000-20,000 rpm. The mixer may include a super-mixer, or the like.

The kneader is a device for fibrilizing a binder and dispersing the ingredients of the mixture according to the present disclosure, and the mixture may be obtained in the form of mixture lumps through the kneading in the kneader. Herein, to obtain the results according to the present disclosure, the kneader may be set to a temperature of 70-200°C or 90-180°C and a pressure condition equal to or higher than ambient pressure, or a pressure of 1-60 atm, 1-30 atm, 1-10 atm, 1-8 atm, 1.1-7 atm, or 1.1-6 atm.

The pulverizer is configured to pulverize the obtained mixture lumps to form mixed a powder for an electrode, and may include a blender or a grinder. The grinder may include a cutter mill, a fine mill, or the like.

The calender is a device for molding the mixed powder for an electrode into a film shape. For example, the calender may include a pair of rollers facing each other, and the film thickness may be controlled from the interval between the rollers.

The lamination roll functions to attach the dry electrode film formed by the calender to at least one surface of the current collector and to carry out pressing.

The porosity of the dry electrode film according to the present disclosure may be determined by the calender and the lamination roll.

In other words, the system for manufacturing a dry electrode according to the present disclosure is characterized by including a kneader and a pulverizer.

The particular structures of the blender, kneader, calender and lamination roll are known to those skilled in the art, and detailed description thereof will be omitted herein.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

Example 1

First, 950 g of lithium manganese oxide ($Li_2MnO_2$) (Posco, L25) as a positive electrode active material, 30 g of carbon black as a conductive material and 13 g of polytetrafluoroethylene (PTFE) as a binder were introduced to a blender and mixed therein at 10,000 rpm for 1 minute to prepare a mixture.

Next, 7 g of FKM (Chemours, FKM10980) as a fluoro-elastomer was added to the mixture, and the resultant mixture was introduced to a kneader.

The temperature of the kneader was stabilized at 150°C, the mixture was introduced to the pressurization type kneader, and the kneader was operated under a pressure of about 1.1 atm at a rate of 40 rpm for 5 minutes to obtain mixture lumps. The mixture lumps were introduced to a blender, pulverized at 10,000 rpm for 30 seconds, and classified by using a sieve having pores with a size of 1 mm to obtain a mixed powder for an electrode. Then, the resultant mixed powder for an electrode was introduced to a lab calender (roll diameter: 160 mm, roll temperature: 100°C) to obtain an electrode film. Two sheets of the electrode films were disposed on both surfaces of aluminum foil (thickness 19 $\mu$m, coated with conductive primer layers containing carbon black and an acrylic binder mixed at a weight ratio of 5:6), and lamination was carried out through a compressing roll maintained at 150°C to obtain an electrode (positive electrode).

The finished electrode had a total thickness of 343 $\mu$m, and the active material layer formed on one surface of the active material layers provided on both surfaces of the current collector had a thickness of 162 $\mu$m.

Example 2

A positive electrode was obtained in the same manner as Example 1, except that 10 g of polytetrafluoroethylene (PTFE) was used as a binder, and 10 g of FKM was used as a fluoro-elastomer.

The finished electrode had a total thickness of 342 $\mu$m, and the active material layer formed on one surface of the active material layers provided on both surfaces of the current collector had a thickness of 162 $\mu$m.

Comparative Example 1

A positive electrode was obtained in the same manner as Example 1, except that 20 g of polytetrafluoroethylene (PTFE) was used as a binder, and 0 g of FKM was used as a fluoro-elastomer.

The finished electrode had a total thickness of 345 $\mu$m, and the active material layer formed on one surface of the active material layers provided on both surfaces of the current collector had a thickness of 163 $\mu$m.

Comparative Example 2

A positive electrode was obtained in the same manner as Example 1, except that 7 g of polytetrafluoroethylene (PTFE) was used as a binder, and 13 g of FKM was used as a fluoro-elastomer.

The finished electrode had a total thickness of 346 $\mu$m, and the active material layer formed on one surface of the active material layers provided on both surfaces of the current collector had a thickness of 164 $\mu$m.

Comparative Example 3

A positive electrode was obtained in the same manner as Example 1, except that 0 g of polytetrafluoroethylene (PTFE) was used as a binder, and 20 g of FKM was used as a fluoro-elastomer. However, the resultant electrode film was broken with ease, and thus a positive electrode sample could not be obtained.

Evaluation of Performance

The positive electrode according to each of Example 1 and Comparative Example 1 and the secondary battery including each positive electrode were evaluated as follows. The results are shown in the following Table 1.

Herein, the secondary battery including the electrode according to each of Example 1 and Comparative Example 1 was obtained as follows.

Lithium metal was deposited on copper foil to a thickness of 70 $\mu$m to obtain a negative electrode.

The electrode according to each of Example 1 and Comparative Example 1 was used as a positive electrode, and a polyethylene membrane (thickness: 20 $\mu$m) was interposed between the positive electrode and the negative electrode to obtain an electrode assembly. The electrode assembly was received in a battery casing, and a liquid electrolyte containing 1 M LiPF$_6$ dissolved in a solvent including ethylene carbonate, dimethyl carbonate and diethyl carbonate mixed at a ratio of 1:2:1 (volume ratio) was injected to the electrode assembly, followed by sealing, to provide a secondary battery.

(1) Loading Amount

The loading amount was calculated according to the following formula:

Loading amount (mAh/cm$^2$) = [Capacity (mAh/g) of active material] x [Weight ratio (wt%) of active material in electrode film] x [Weight per unit area (g/cm$^2$) of electrode film]

(2) Porosity

The porosity of the electrode was obtained by subtracting the volume and weight of the current collector from the volume and weight of the electrode to determine the apparent density of the electrode active material layer alone and by using the true density calculated based on the true density of each ingredient and composition, according to the following Formula:

$$\text{Porosity (\%)} = \{1 - (\text{Apparent density/True density})\} \times 100$$

(3) Flexural Resistance

According to the method of Test Standard JIS K5600-5-1, the flexural resistance of each electrode was determined by allowing the electrode to be in contact with test rods having different diameters and lifting both ends of the electrode to judge whether cracks are generated or not and to determine the minimum diameter causing no cracks.
Particularly, the flexural resistance of the electrode was evaluated through the steps of:

preparing a rectangular-shaped electrode sample having a size of 100 mm x 50 mm;
preparing test rods each having a diameter of 2, 3, 4, 5, 6, 8, 10, 12, 16, 20, 25 or 32 mm, selecting the test rod having the largest diameter and allowing the electrode sample to be in contact with the test rod, and judging whether cracks are generated in the mixture film of the electrode sample or not, when both ends of the electrode sample are lifted; and selecting the test rod having the second largest diameter if any cracks are not generated in the preceding step and judging whether cracks are generated in the mixture film of the electrode sample or not in the same manner as the preceding step, and repeating this step to determine the minimum diameter value of the test rod causing no cracks of the mixture film of the electrode sample as flexural resistance.

For example, when the electrode sample was allowed to be in contact with a test rod by using test rods having a diameter ranging from 32 mm to 3 mm, and both ends of the electrode sample were lifted, no cracks were generated in the mixture film of the electrode sample. However, when the electrode sample was allowed to be in contact with a test rod having a diameter of 2 mm, and both ends of the electrode sample were lifted, cracks were generated in the mixture film of the electrode sample. In this case, the flexural resistance of the dry electrode was determined as 3 mm Φ, i.e. the minimum diameter value of test rod causing no cracks in the mixture film of the electrode sample.

[Table 1]

|  | Weight ratio of binder : fluoro-elastomer | Loading amount (mAh/cm2) | Porosity (%) | Flexural resistance (mandrel) |
|---|---|---|---|---|
| Ex. 1 | 1.3 wt% : 0.7 wt% | 4.78 | 25.1 | 4Φ |
| Ex. 2 | 1.0 wt% : 1.0 wt% | 4.73 | 25.5 | 5Φ |
| Comp. Ex. 1 | 2.0 wt% : 0 wt% | 4.83 | 24.7 | 12Φ |
| Comp. Ex. 2 | 0.7 wt : 1.3 wt% | 4.79 | 25.5 | 16Φ |
| Comp. Ex. 3 | 0 wt% : 2 wt% | Not available | Not available | Not available |

Referring to Table 1, it can be seen that the electrodes according to Examples 1 and 2 show improvement in property of breaking when impact or deformation is generated, and thus realize excellent flexural resistance, compared to the electrodes according to Comparative Examples 1-3.

**Claims**

1.   An electrode which comprises:

an electrode current collector; and
an electrode layer disposed on the electrode current collector and containing an active material, a conductive material, a binder and a fluoro-elastomer, and
has a flexural resistance of 10 mm Φ or less.

2.   The electrode according to claim 1, wherein the binder is fibrilized to bind the active material, the conductive material and the fluoro-elastomer.

3. The electrode according to claim 1, wherein the fluoro-elastomer comprises fluorovinylidene-based rubber (FKM), tetrafluoroethylenepropylene-based rubber (FEPM), tetrafluorothylene-perfluoromethylvinyl ether-based rubber (FFKM), tetrafluoroethylene-based rubber (TFE), or two or more of them.

4. The electrode according to claim 1, wherein the weight ratio of the binder to the fluoro-elastomer is 40:60-80:20.

5. The electrode according to claim 1, which has a flexural resistance of 2-8 mm $\Phi$.

6. The electrode according to claim 1, wherein the flexural resistance of the electrode is evaluated according to the method of Test Standard JIS K5600-5-1.

7. The electrode according to claim 1, wherein the flexural resistance of the electrode is evaluated through the steps of:

   preparing a rectangular-shaped electrode sample having a size of 100 mm x 50 mm;
   preparing test rods each having a diameter of 2, 3, 4, 5, 6, 8, 10, 12, 16, 20, 25 or 32 mm, selecting the test rod having the largest diameter and allowing the electrode sample to be in contact with the test rod, and judging whether cracks are generated in the mixture film of the electrode sample or not, when both ends of the electrode sample are lifted; and
   selecting the test rod having the second largest diameter if any cracks are not generated in the preceding step and judging whether cracks are generated in the mixture film of the electrode sample or not in the same manner as the preceding step, and repeating this step to determine the minimum diameter value of the test rod causing no cracks of the mixture film of the electrode sample as flexural resistance.

8. The electrode according to claim 1, wherein the binder has a crystallization degree of 10% or less.

9. The electrode according to claim 1, wherein the binder comprises a fluorine-containing binder, the electrode layer has a QBR (Quantified Binder Ratio) of 1.1 or less, and the QBR is defined by the following formula:

$$QBR = Bs/Bf,$$

   QBR = Bs/Bf, wherein Bs represents the average value of fluorine content in the surface region of the electrode layer ranging from the outermost surface of the electrode layer to up to 15% of the total thickness of the electrode layer, and Bf represents the average value of fluorine content of the bottom region of the electrode layer ranging from the interface of the electrode layer facing the current collector to up to 15% of the total thickness of the electrode layer.

10. The electrode according to claim 1, wherein the conductive material comprises activated carbon, graphite, carbon black, ketjen black, carbon nanotubes, or two or more of them.

11. The electrode according to claim 1, wherein the binder comprises polytetrafluoroethylene (PTFE).

12. The electrode according to claim 1, wherein the active material is a positive electrode active material or a negative electrode active material.

13. The electrode according to claim 1, wherein the content of the active material is 80-98 parts by weight, the content of the conductive material is 0.5-10 parts by weight, the content of the binder is 0.5-5 parts by weight, and the content of the fluoro-elastomer is 0.1-5 parts by weight.

14. The electrode according to claim 1, wherein the current collector further comprises a conductive primer layer on at least one surface thereof.

15. The electrode according to claim 1, wherein the electrode layer is derived from a dry electrode film.

16. A method for manufacturing the electrode as defined in claim 1, comprising the steps of:

   preparing a mixture containing an active material, a conductive material, a binder and a fluoro-elastomer;
   kneading the mixture at 70-200°C under a pressure equal to or higher than ambient pressure to prepare mixture lumps;

pulverizing the mixture lumps to obtain a mixed powder for an electrode;

introducing the mixed powder for an electrode between a plurality of rolls to carry out calendering, thereby forming an electrode film; and

laminating the electrode film on a metallic current collector.

17. The method for manufacturing the electrode according to claim 16, wherein the step of kneading the mixture to prepare mixture lumps is carried out in a kneader under a pressure equal to or higher than ambient pressure.

18. The method for manufacturing the electrode according to claim 16, wherein the electrode film has a pressing ratio of 20% or less.

19. A secondary battery comprising a positive electrode, a negative electrode and a separator interposed between the positive electrode and the negative electrode, wherein at least one of the positive electrode and the negative electrode is the electrode as defined in any one of claims 1 to 15.

20. An energy storage system comprising the secondary battery as defined in claim 19 as a unit cell.

FIG. 1

<u>10</u>

FIG. 2

FIG. 3a

<u>100</u>

FIG. 3b

<u>100</u>

FIG. 4

**EP 4 513 583 A1**

# INTERNATIONAL SEARCH REPORT

| International application No. |
|---|
| **PCT/KR2023/005414** |

### A. CLASSIFICATION OF SUBJECT MATTER

**H01M 4/13**(2010.01)i; **H01M 4/04**(2006.01)i; **H01M 4/139**(2010.01)i; **H01M 4/62**(2006.01)i; **H01M 4/66**(2006.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/13(2010.01); B05D 3/12(2006.01); B05D 5/12(2006.01); B07B 1/20(2006.01); B07B 1/46(2006.01); H01M 10/052(2010.01); H01M 10/0525(2010.01); H01M 4/139(2010.01); H01M 4/525(2010.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 불화 엘라스토머 (fluoro elastomer), 내굴곡성 (bending resistance), 건식 전극 (dry electrode), 이차 전지 (secondary battery), 가요성 (flexibility)

### C. DOCUMENTS CONSIDERED TO BE RELEVANT

| Category* | Citation of document, with indication, where appropriate, of the relevant passages | Relevant to claim No. |
|---|---|---|
| X | KR 10-2012-0027457 A (DAIKIN INDUSTRIES, LTD.) 21 March 2012 (2012-03-21) See abstract; paragraphs [0001], [0019]-[0020], [0046]-[0049], [0074]-[0099], [0106] and [0123]; and claims 1, 16 and 17. | 1,3-7,9-13,19-20 |
| Y | | 16-18 |
| A | | 2,8,14-15 |
| Y | KR 10-2006-0025230 A (MAXWELL TECHNOLOGIES, INC.) 20 March 2006 (2006-03-20) See abstract; paragraphs [0018], [0052]-[0053], [0089] and [0103]; and figures 3 and 7. | 16-18 |
| A | KR 10-2019-0017875 A (SOLVAY(SOCIETE ANONYME) et al.) 20 February 2019 (2019-02-20) See entire document. | 1-20 |
| A | KR 10-2019-0035579 A (LG CHEM, LTD.) 03 April 2019 (2019-04-03) See entire document. | 1-20 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **07 August 2023** | **07 August 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 513 583 A1**

**INTERNATIONAL SEARCH REPORT**

| International application No. |
|---|
| **PCT/KR2023/005414** |

**C.     DOCUMENTS CONSIDERED TO BE RELEVANT**

| Category* | Citation of document, with indication, where appropriate, of the relevant passages | Relevant to claim No. |
|---|---|---|
| A | JP 2013-073829 A (SUMITOMO CHEMICAL CO., LTD.) 22 April 2013 (2013-04-22)<br>See entire document. | 1-20 |

Form PCT/ISA/210 (second sheet) (July 2022)

## INTERNATIONAL SEARCH REPORT
### Information on patent family members

International application No.

**PCT/KR2023/005414**

| Patent document cited in search report | | | Publication date (day/month/year) | Patent family member(s) | | | Publication date (day/month/year) |
|---|---|---|---|---|---|---|---|
| KR | 10-2012-0027457 | A | 21 March 2012 | CN | 102473916 | A | 23 May 2012 |
| | | | | JP | 5382120 | B2 | 08 January 2014 |
| | | | | KR | 10-1397774 | B1 | 20 May 2014 |
| | | | | WO | 2011-002097 | A1 | 06 January 2011 |
| | | | | WO | 2011-002097 | A1 | 13 December 2012 |
| KR | 10-2006-0025230 | A | 20 March 2006 | CA | 2465086 | A1 | 22 October 2004 |
| | | | | CN | 101194384 | A | 04 June 2008 |
| | | | | CN | 102569719 | A | 11 July 2012 |
| | | | | CN | 102569719 | B | 05 April 2017 |
| | | | | CN | 1838999 | A | 27 September 2006 |
| | | | | CN | 1838999 | B | 18 April 2012 |
| | | | | EP | 1644136 | A2 | 12 April 2006 |
| | | | | EP | 1644136 | B1 | 29 August 2018 |
| | | | | EP | 1644136 | B8 | 03 April 2019 |
| | | | | EP | 1766706 | A1 | 28 March 2007 |
| | | | | EP | 1766706 | B1 | 14 November 2018 |
| | | | | EP | 1882277 | A1 | 30 January 2008 |
| | | | | EP | 2357043 | A2 | 17 August 2011 |
| | | | | EP | 2357043 | A3 | 05 October 2011 |
| | | | | EP | 2357044 | A2 | 17 August 2011 |
| | | | | EP | 2357044 | A3 | 05 October 2011 |
| | | | | EP | 2357045 | A2 | 17 August 2011 |
| | | | | EP | 2357045 | A3 | 05 October 2011 |
| | | | | EP | 2357046 | A2 | 17 August 2011 |
| | | | | EP | 2357046 | A3 | 05 October 2011 |
| | | | | EP | 2357046 | B1 | 04 December 2013 |
| | | | | EP | 3467918 | A1 | 10 April 2019 |
| | | | | EP | 3498385 | A1 | 19 June 2019 |
| | | | | EP | 3498385 | B1 | 07 April 2021 |
| | | | | EP | 3863079 | A1 | 11 August 2021 |
| | | | | ES | 2699850 | T3 | 13 February 2019 |
| | | | | ES | 2705475 | T3 | 25 March 2019 |
| | | | | ES | 2879335 | T3 | 22 November 2021 |
| | | | | HU | E041349 | T2 | 28 May 2019 |
| | | | | HU | E054796 | T2 | 28 September 2021 |
| | | | | JP | 2007-531245 | A | 01 November 2007 |
| | | | | JP | 2008-541339 | A | 20 November 2008 |
| | | | | JP | 2011-109115 | A | 02 June 2011 |
| | | | | JP | 4772673 | B2 | 14 September 2011 |
| | | | | KR | 10-1211968 | B1 | 13 December 2012 |
| | | | | KR | 10-2008-0005584 | A | 14 January 2008 |
| | | | | US | 10547057 | B2 | 28 January 2020 |
| | | | | US | 11430613 | B2 | 30 August 2022 |
| | | | | US | 2005-0057888 | A1 | 17 March 2005 |
| | | | | US | 2005-0186473 | A1 | 25 August 2005 |
| | | | | US | 2005-0250011 | A1 | 10 November 2005 |
| | | | | US | 2005-0266298 | A1 | 01 December 2005 |
| | | | | US | 2005-0271798 | A1 | 08 December 2005 |
| | | | | US | 2006-0109608 | A1 | 25 May 2006 |
| | | | | US | 2006-0114643 | A1 | 01 June 2006 |

Form PCT/ISA/210 (patent family annex) (July 2022)

**INTERNATIONAL SEARCH REPORT**
**Information on patent family members**

International application No.

**PCT/KR2023/005414**

| Patent document cited in search report | Publication date (day/month/year) | Patent family member(s) | | | Publication date (day/month/year) |
|---|---|---|---|---|---|
| | | US | 2006-0133012 | A1 | 22 June 2006 |
| | | US | 2006-0133013 | A1 | 22 June 2006 |
| | | US | 2006-0137158 | A1 | 29 June 2006 |
| | | US | 2006-0143884 | A1 | 06 July 2006 |
| | | US | 2006-0146475 | A1 | 06 July 2006 |
| | | US | 2006-0146479 | A1 | 06 July 2006 |
| | | US | 2006-0147712 | A1 | 06 July 2006 |
| | | US | 2006-0148112 | A1 | 06 July 2006 |
| | | US | 2006-0148191 | A1 | 06 July 2006 |
| | | US | 2006-0246343 | A1 | 02 November 2006 |
| | | US | 2007-0026317 | A1 | 01 February 2007 |
| | | US | 2007-0122698 | A1 | 31 May 2007 |
| | | US | 2007-0190424 | A1 | 16 August 2007 |
| | | US | 2008-0016664 | A1 | 24 January 2008 |
| | | US | 2008-0092808 | A1 | 24 April 2008 |
| | | US | 2008-0102371 | A1 | 01 May 2008 |
| | | US | 2008-0117564 | A1 | 22 May 2008 |
| | | US | 2008-0117565 | A1 | 22 May 2008 |
| | | US | 2008-0206446 | A1 | 28 August 2008 |
| | | US | 2008-0236742 | A1 | 02 October 2008 |
| | | US | 2008-0266753 | A1 | 30 October 2008 |
| | | US | 2009-0223630 | A1 | 10 September 2009 |
| | | US | 2009-0239127 | A1 | 24 September 2009 |
| | | US | 2009-0290288 | A1 | 26 November 2009 |
| | | US | 2010-0014215 | A1 | 21 January 2010 |
| | | US | 2010-0033901 | A1 | 11 February 2010 |
| | | US | 2010-0119699 | A1 | 13 May 2010 |
| | | US | 2010-0263910 | A1 | 21 October 2010 |
| | | US | 2011-0114896 | A1 | 19 May 2011 |
| | | US | 2011-0165318 | A9 | 07 July 2011 |
| | | US | 2011-0299219 | A1 | 08 December 2011 |
| | | US | 2012-0040243 | A1 | 16 February 2012 |
| | | US | 2013-0157141 | A1 | 20 June 2013 |
| | | US | 2015-0072234 | A1 | 12 March 2015 |
| | | US | 2017-0098826 | A1 | 06 April 2017 |
| | | US | 2020-0152987 | A1 | 14 May 2020 |
| | | US | 7090946 | B2 | 15 August 2006 |
| | | US | 7102877 | B2 | 05 September 2006 |
| | | US | 7227737 | B2 | 05 June 2007 |
| | | US | 7295423 | B1 | 13 November 2007 |
| | | US | 7342770 | B2 | 11 March 2008 |
| | | US | 7352558 | B2 | 01 April 2008 |
| | | US | 7384433 | B2 | 10 June 2008 |
| | | US | 7492571 | B2 | 17 February 2009 |
| | | US | 7495349 | B2 | 24 February 2009 |
| | | US | 7508651 | B2 | 24 March 2009 |
| | | US | 7722686 | B2 | 25 May 2010 |
| | | US | 7791860 | B2 | 07 September 2010 |
| | | US | 7791861 | B2 | 07 September 2010 |
| | | US | 7851238 | B2 | 14 December 2010 |

Form PCT/ISA/210 (patent family annex) (July 2022)

**INTERNATIONAL SEARCH REPORT**
Information on patent family members

International application No.

**PCT/KR2023/005414**

| Patent document cited in search report | | | Publication date (day/month/year) | Patent family member(s) | | | Publication date (day/month/year) |
|---|---|---|---|---|---|---|---|
| | | | | US | 7883553 | B2 | 08 February 2011 |
| | | | | US | 7920371 | B2 | 05 April 2011 |
| | | | | US | 7935155 | B2 | 03 May 2011 |
| | | | | US | 8072734 | B2 | 06 December 2011 |
| | | | | US | 8213156 | B2 | 03 July 2012 |
| | | | | US | 8815443 | B2 | 26 August 2014 |
| | | | | US | 9525168 | B2 | 20 December 2016 |
| | | | | WO | 2005-008807 | A2 | 27 January 2005 |
| | | | | WO | 2005-008807 | A3 | 09 June 2005 |
| | | | | WO | 2006-001847 | A1 | 05 January 2006 |
| | | | | WO | 2006-135495 | A1 | 21 December 2006 |
| KR | 10-2019-0017875 | A | 20 February 2019 | CN | 109314222 | A | 05 February 2019 |
| | | | | CN | 109314222 | B | 01 July 2022 |
| | | | | EP | 3469643 | A1 | 17 April 2019 |
| | | | | JP | 2019-522874 | A | 15 August 2019 |
| | | | | JP | 7046013 | B2 | 01 April 2022 |
| | | | | KR | 10-2413868 | B1 | 28 June 2022 |
| | | | | US | 11532823 | B2 | 20 December 2022 |
| | | | | US | 2020-0321618 | A1 | 08 October 2020 |
| | | | | WO | 2017-216179 | A1 | 21 December 2017 |
| KR | 10-2019-0035579 | A | 03 April 2019 | CN | 110476282 | A | 19 November 2019 |
| | | | | EP | 3595052 | A2 | 15 January 2020 |
| | | | | EP | 3595052 | B1 | 21 July 2021 |
| | | | | KR | 10-2378118 | B1 | 25 March 2022 |
| | | | | PL | 3595052 | T3 | 13 December 2021 |
| | | | | US | 11276846 | B2 | 15 March 2022 |
| | | | | US | 2020-0321599 | A1 | 08 October 2020 |
| | | | | WO | 2019-059724 | A2 | 28 March 2019 |
| | | | | WO | 2019-059724 | A3 | 09 May 2019 |
| JP | 2013-073829 | A | 22 April 2013 | JP | 5758256 | B2 | 05 August 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220049213